# EUROPEAN PATENT SPECIFICATION

(11) **EP 2 688 957 B1**
(45) Date of publication and mention of the grant of the patent: **27.02.2019**
(21) Application number: 12759916.5
(22) Date of filing: 23.03.2012
(51) Int. Cl.: C08L 83/12, C08L 83/07, C08K 5/5399, C08L 67/00, C09K 21/06, C08L 101/16, C08G 81/00, C08J 3/00, C08K 5/00, C08K 3/00, C08G 77/46, C08G 64/42, C09K 21/12, C08K 5/49, C08K 5/3492, C08K 5/5425

(54) **BIOBASED POLYMER COMPOSITIONS**
POLYMERZUSAMMENSETZUNGEN AUF BIOLOGISCHER GRUNDLAGE
COMPOSITIONS DE POLYMÈRES D'ORIGINE BIOLOGIQUE

(30) Priority: 23.03.2011 US 201161466516 P
(43) Date of publication of application: 29.01.2014
(73) Proprietor: Stratasys, Inc., Eden Prairie, MN 55344 (US)
(72) Inventor: CERNOHOUS, Jeffrey Jacob, Hudson Wisconsin 54016 (US); PAWLOSKI, Adam R., Lake Elmo Minnesota 55042 (US)
(74) Representative: Röthinger, Rainer
(86) International application number: PCT/US2012/030237
(87) International publication number: WO 2012/129464

(56) References cited:
- EP-A2- 0 399 827
- WO-A1-2010/088067
- WO-A2-2010/108076
- WO-A2-2010/108076
- WO-A2-2011/103479
- US-A- 5 773 510
- US-A- 5 919 861
- US-A1- 2009 197 999
- US-B1- 6 207 782
- US-B1- 6 207 782

## Description

### TECHNICAL FIELD

The present invention relates to a bio-based polymer and an acrylated silicone polyether that in combination form melt processable polymers that possess superior and unexpected mechanical properties.

### BACKGROUND

Polylactic acid polymers (PLA) and other bio-based polymers possess certain physical limitations when compared to petroleum based polymeric materials. The limitations may include their susceptibility to degradation and loss of properties during processing and reprocessing. The admixture of conventional materials with a bio-based polymer composition may adversely impact the physical characteristics of the composition, ultimately rendering the composition unsuitable or undesirable for its intended purpose. Additionally, highly filled bio-based polymers often have inferior physical characteristics compared to competitive materials due to their molecular architecture. Such materials are often incapable of achieving the desired strength and impact characteristics. Other bio-based compositions offer molecular architecture that potentially limits the subsequent processing once the multicomponent composition is created.

WO2010/088067 (A1) discloses a polylactic acid-containing resin composition comprising: a polylactic acid; and a (meth)acryl-silicone copolymer formed from (i) methyl (meth)acrylate and (ii) a reactive silicone, wherein the (meth)acryl-silicone copolymer has a weight average molecular weight of 25,000 or more and wherein the (meth)acryl-silicone copolymer comprises 10 to less than 50 weight percent of the silicone.

US 6,207,782 B1 discloses a liquid composition comprising: a) a polymer formed from the polymerization in a solvent of monomers consisting essentially of acrylated or methacrylated polyether siloxane copolymers wherein the siloxane copolymer is of the formula [R₃SiO_{1/2}]ₘ[O_{1/2}SiR₂O_{1/2}]ₙ[SiO_{3/2}R]ₒ[SiO_{4/2}]ₚ, wherein R is defined in claim 1 of the document, and b) said solvent.

WO2010108076 (A2) discloses a composition comprising a melt processable, hyper-branched polymer derived from a biodegradable polymer, and a branching agent.

US5919861 (A) discloses a process for the preparation of branched thermoplastic resins comprising: heating a mixture of an unsaturated resin, a free radical initiator, and a stable free radical agent, wherein a free radical initiator fragment and the stable free radical agent add to unsaturated bonds of the unsaturated resin; adding to the heated mixture at least one polymerizable monomer; adding a branching agent to the heated mixture after substantially all the monomer has been polymerized, wherein the branching agent contains at least two covalently bonded stable free radical substituents appended to unsaturated resin; and cooling the mixture, and wherein the resulting product is a branched thermoplastic resin with arms or branches comprised of polymerized monomer with substantially uniform length and narrow polydispersity.

### SUMMARY

The bio-based polymeric compositions as defined in the claims have an excellent balance of mechanical properties and enable the melt processing of the compositions. The combination of these attributes is a function of the molecular architecture of the compositions. The bio-based polymers of this invention are produced by melt processing bio-based polymers as defined in the claims with an acrylated silicone polyether at temperatures that promote covalent reactions between the bio-based polymer and acrylated silicone polyether. In one embodiment, the polymer is a bio-based linear polyester. The invention thus relates to a composition comprising a melt processable polymer derived from a bio-based polymer and an acrylated silicone polyether wherein the bio-based polymer is selected from the group consisting of polysaccharides, peptides, aliphatic polyesters, polyamino acids, polyvinyl alcohol, polyamides, polyalkylene glycols, and copolymers thereof and wherein the melt processable polymer is produced by melt processing said bio-based polymer with the acrylated silicone polyether at temperatures that promote covalent reactions between the bio-based polymer and the acrylated silicone polyether. The invention also refers to a method comprising melt processing a linear bio-based polyester with an acrylated silicone polyether to at temperatures that promote free radical reactions between the linear biodegradable polyester and the acrylated silicone polyether form a melt processable polymer.

The composition has a molecular structure that is in part created by the acrylated silicone polyether utilized in the composition. In one embodiment, the acrylated silicone polyether undergoes a free radical homolysis reaction and reacts with the bio-based polyester during melt processing to form a polymeric composite. The degree of interaction of the polymer chains possesses characteristics of a higher molecular weight material while still being subsequently melt processable.

The finished polymer may demonstrate improved mechanical characteristics as indicated by relatively high impact strength (unnotched) when compared to conventional compounded bio-based polymers.

For purposes of the present invention, the following terms used in this application are defined as follows:
"Bio-based Polymer" means a polymeric material or resin that is derived from renewable resources.
"Polymeric Composite" means a mixture of a polymeric material and an additive or filler.
"Melt Processable Composition" means a formulation that is melt processed, typically at elevated temperatures, by means of a conventional polymer processing technique such as extrusion or injection molding, as an example.
"Melt Processing Techniques" means extrusion, injection molding, blow molding, rotomolding, or batch mixing.
"Acrylated Silicone Polyether" means a siloxane polyether copolymer having a one or more pendant acrylate moieties extending from either the siloxane or polyether.

The above summary is not intended to describe each disclosed embodiment or every implementation of the composition.

### DETAILED DESCRIPTION

Compositions of the invention are produced by melt processing bio-based polymers with acrylated silicone polyethers as defined in the claims. Bio-based polymers for practicing the present invention are polysaccharides, peptides, aliphatic polyesters, polyamino acids, polyvinyl alcohol, polyamides, polyalkylene glycols, and copolymers thereof. The resulting composite exhibits improved mechanical properties without exhibiting any adverse effects on flexural properties.

In one aspect, the bio-based polymer is a linear polyester. Non-limiting examples of linear polyesters include polylactic acids, poly-L-lactic acid (PLLA), and a random copolymer of L-lactic acid and D-lactic acid, and derivatives thereof. Other non-limiting examples of polyesters include polycaprolactone, polyhydroxybutyric acid, polyhydroxyvaleric acid, polyethylene succinate, polybutylene succinate, polybutylene adipate, polymalic acid, polyglycolic acid, polysuccinate, polyoxalate, polybutylene diglycolate, and polydioxanone.

An acrylated silicone polyether is melt processed with the bio-based polymer to form the polymeric composition. The polyether component may aid in the dispersion and compatibility of the acrylated silicone polyether in the bio-based polymer. Amphiphilic polymers having pendent acrylate moieties are well suited in certain embodiments. In another embodiment, the acrylated silicone polyether agent for use in this invention include those materials generally sold as TEGO RAD 2250, Acrylated Polyethersiloxane, commercially available from Evonik Inc. (Parsippany, New Jersey). The acrylated silicone polyethers are generally included in the polymeric matrix in amounts up to about 20%. In some embodiments, the acrylated silicone polyether may range from 1% to 5%.

Free radical initiators may be employed to assist in the melt processing and inherent reaction between the bio-based polymer and an acrylated silicone polyether. A free radical initiator is a species, that when melt processed, forms reactive free radical moieties. Free radical initiators useful in this invention include organic peroxides and diazocompounds. Non-limiting examples of specific free radical initiators include: benzoyl peroxide, dicumyl peroxide, di-tert-butyl peroxide and azoisobutrylnitrile. The free radical initiator may be included in the melt processable composition at amounts less than 0.25% by weight.

In another embodiment, impact modifying additives may also be added or incorporated into the composition to address desired physical characteristics of the melt processable composition. Non-limiting examples of impact modifiers useful in this invention include: elastomeric copolyesters, polyaklylene glycols and functionalized naturally occurring oils. Examples of elastomeric polyesters include, but are not limited to, those sold under the Neostar (Eastman Chemical Co., Kingsport, TN), Biomax (DuPont, Wilmington, DE) and Hytrel (DuPont) tradenames. Non-limiting examples of polyalkylene glycols include polyethylene glycols sold under the Carbowax tradename (Dow Chemical Co., Midland, MI). Non-limiting examples of functionalized naturally occurring oils include: malinated or epoxidized soybean, linseed or sunflower oils, which are commercially available from Cargill Inc.

The polymer compositions of this invention have an excellent balance of mechanical properties and are melt processable. Certain compositions demonstrate superior impact strengths while maintaining relatively high flexural values. The combination of these attributes is a function of the molecular architecture of the compositions disclosed here. In one embodiment, the bio-based polyesters of this invention are produced by melt processing a linear bio-based polyester with an acrylated silicone polyether at temperatures that promote free radical reactions between the linear biodegradable polyester and the acrylated silicone polyether.

The amount of components in the melt processable may vary depending upon the intended end use application. The polymer may comprise from about 20 to about 99 percent by weight of the final composition. The acrylated silicone polyether agent may be included at a level of up to 20 percent by weight.

In another aspect, flame retardant bio-based polymer compositions are produced by melt processing a polymer as defined in the claims, such as a linear bio-based polyester, with an acrylated silicone polyether and one or more flame retardant additives. Any conventional halogenated or non-halogenated flame retardant additives can be utilized in this invention. The bio-based polyester of this invention has improved flame retardancy when compared to a linear bio-based polyester. In one embodiment, the flame retardant polyester, that includes a flame retardant additive demonstrates self extinguishing flame retardant properties. Although halogenated flame retardants can be utilized in this invention, the environmental hazards, biopersistance and toxicity associated with many of these additives make them less viable candidates in bio-based polymer compositions. Non-halogenated flame retardants are more preferred as they do not suffer from these issues. Non-halogenated flame retardant additive materials useful in this invention include inorganic compounds (such as, for example, metal hydroxides, metal sulfates, metal nitrates, carbonate compounds, tin compounds, titanium compounds, zirconium compounds and molybdenum compounds) silica compounds, phosphorous compounds, boric acid containing compounds, organic compounds, and nitrogen compounds. The flame retardant additive may be included in the melt processable composition at levels of up to 80 percent by weight.

Non-limiting examples of desirable non-halogenated phosphorus based flame retardant additives include: ammonium phosphate, ammonium polyphosphate, melamine phosphate, red phosphorus, phosphoric esters, tris(chloroethyl)phosphate, tris(monochloropropyl)phosphate, tris(dichloropropyl) phosphate, triallyl phosphate, tris(3-hydroxypropyl) phosphate, tris(tribromophenyl)phosphate, tris-.beta.-chloropropyl phosphate, tris(dibromophenyl) phosphate, tris(tribromoneopentyl)phosphat- e, tetrakis(2-chloroethyl)ethylenediphosphate, dimethyl methylphosphate, tris(2-chloroethyl) orthophosphate, aromatic condensed phosphates, halogen-containing condensed organophosphates, ethylenebis[tris(2-cyanoet- hyl)]phosphonium bromide, ammonium polyphosphate, .beta.-chloroethyl acid phosphate, butyl pyrophosphate, butyl acid phosphate, butoxyethyl acid phosphate, 2-ethylhexyl acid phosphate, melamine phosphate, halogen-containing phosphates, and phenylphosphonic acid. In one aspect, ammonium polyphosphate is utilized as the flame retardant additive.

In another aspect of the invention, the melt processable composition as defined in the claims may contain other additives. Non-limiting examples of conventional additives include: antioxidants, light stabilizers, fibers, blowing agents, foaming additives, antiblocking agents, heat stabilizers, impact modifiers, biocides, compatibilizers, tackifiers, colorants, coupling agents, and pigments. The additives may be incorporated into the melt processable composition in the form of powders, pellets, granules, or in any other extrudable form. The amount and type of conventional additives in the melt processable composition may vary depending upon the polymeric matrix and the desired physical properties of the finished composition. Those skilled in the art of melt processing are capable of selecting appropriate amounts and types of additives to match with a specific polymeric matrix in order to achieve desired physical properties of the finished material.

The melt processable composition is produced by melt processing as defined in claim 1 and can be prepared by any of a variety of ways. For example, the bio-based polymer, acrylated silicone polyether, optional flame retardant and optional additives can be combined together by any of the blending means usually employed in the plastics industry, such as with a compounding mill, a Banbury mixer, or a mixing extruder. The materials may be used in the form, for example, of a powder, a pellet, or a granular product. The mixing operation is most conveniently carried out at a temperature above the melting point or softening point of the polymer. The resulting melt-blended mixture can be either extruded directly into the form of the final product shape, pelletized, or otherwise comminuted into a desired particulate size or size distribution and fed to an extruder, which typically will be a twin-screw extruder, that melt-processes the blended mixture to form the final product shape. Alternatively, the composition may be molded into a desired form. The resulting composite exhibits superior performance results when the hyper-branched polymer is produced using this protocol.

In another embodiment, the flame retardant additive is melt processed with the bio-based polymer to form a masterbatch. This masterbatch may optionally contain the acrylated silicone polyether. The masterbatch is then let down to the desired level of flame retardant additive in a subsequent melt processing step. This two step process can have the effect of improving the dispersion of the flame retardant additive and the chemical and mechanical properties of the final compound. In an alternative embodiment, the flame retardant masterbatch is made in the presence of the acrylated silicone polyether and a free radical initiator is added during a subsequent processing step. This two step process produces a particularly useful, bio-based flame retardant polymer composition. Those skilled in the art of melt processing polymer compositions are capable of selecting processing steps to achieve a desired level of intermixed components.

Melt-processing typically is performed at a temperature from 80° to 300° C, although optimum operating temperatures are selected depending upon the melting point, melt viscosity, and thermal stability of the composition. Different types of melt processing equipment, such as extruders, may be used to process the melt processable compositions of this invention. Extruders suitable for use with the present invention are described, for example, by Rauwendaal, C., "Polymer Extrusion," Hansen Publishers, p. 11 - 33, 2001.

The composites of this invention are suitable for manufacturing articles in the construction, electronics, consumer goods and automotive industries. For example, articles incorporating the composition of the present invention may include: molded architectural products, forms, automotive parts, building components, household articles, or electronic hard goods.

The resulting articles produced by melt processing the inventive composition exhibit superior mechanical characteristics. For example, a polymer produced according to the disclosed embodiments may have one or more of an impact strength greater than 265 joules per meter (unnotched) and flexural modulus of greater than 2500 megapascals. In certain embodiments, the ratio of flexural modulus to impact strength may be less than 11:1 and even 5:1 or less. Additionally with the inclusions of a flame retardant additive, the composition exhibits self extinguishing properties under UL 94 test procedures. In certain embodiments, the polymer may have a rating of HB on the UL 94 horizontal flame retardant test. Additionally, with the inclusion of a flame retardant compound, the polymer has one or more of an impact strength greater than 200 joules/meter (unnotched) and flexural modulus of greater than 3000 megapascals. The polymeric composite with a flame retardant composition is capable of achieving a Class1/A rating under the ASTM E84-08 test or the comparable ANSI/UL 723 test. The polymer with a flame retardant composition is also capable of achieving a rating of V2, V1 or V0 on the UL 94 vertical flame retardant test.

### EXAMPLES

Materials used to generate the following examples include:

| **Material** | **Description** |
|---|---|
| PLA | Ingeo 2003D poly(lactic acid), commercially available from NatureWorks LLC (Minneapolis, MN) |
| Branching Agent 1 | SR494, Ethoxylated Pentaerythritoltetraacrylate, commercially available from Sartomer USA LLC (Exton, PA) |
| Branching Agent 2 | TEGO RAD 2250, Acrylated Polyethersiloxane, commercially available from Evonik Inc. (Parsippany, NJ) |
| Initiator 1 | Dicumyl Peroxide, commercially available from Sigma Aldrich (Milwaukee, WI) |

Bio-based polymer compositions were prepared using the following protocol. PLA, Branching Agent and optionally Initiator were dry mixed in a plastic bag and gravity fed into a 26 mm co-rotating twin screw extruder (40:1, L:D) fitted with a four strand die (commercially available from Labtech Engineering, Samutprakarn, Thailand). All samples were processed at 300 rpm screw speed using the following temperature profile: Zone 1-2 = 180 °C, Zone 3-4 = 180 °C, Zone 5-6 = 180 °C, Zone 7-8 = 180 °C, Die = 180 °C. The resulting strands were subsequently cooled in a water bath and pelletized into 0.64 cm pellets. The resulting pellets were injection molded into test specimens following ASTM D638 (tensile) and D790 (flexural) specifications. Injection molding on bio-based polymer formulations was performed using an 85 ton machine (commercially available from Engel Corporation, York, PA) having a barrel and nozzle temperature of 175 °C. The flexural and impact properties were subsequently tested as specified in ASTM D790 and D256 respectively.

Table 1 gives the formulations for bio-based polymer compositions comparative example CE1 and examples 1-4 that were produced. Table 2 gives the mechanical properties for bio-based polymer compositions comparative example CE1 and examples 1-4.

**Table 1. Formulations for Bio-based Polymer Formulations Comparative Examples CE1-CE3 and Examples 1-4**

| **Example** | **PLA (wt %)** | **FR (wt %)** | **Branching Agent 1 (wt %)** | **Branching Agent 2 (wt %)** | **Initiator (wt %)** |
|---|---|---|---|---|---|
| CE1 | 100 | - | - | - | - |
| CE2 | 95 | - | 5 | - | - |
| 1 | 99 | - | - | 1 | - |
| 2 | 97.5 | - | - | 2.5 | - |
| 3 | 95 | - | - | 5 | - |
| CE3 | 94.75 | - | 5 | - | 0.25 |
| 4 | 94.75 | - | - | 5 | 0.25 |

**Table 2. Mechanical Properties of Comparative Examples CE1-CE3 and Examples 1-4**

| **Example** | **Flexural Modulus (MPa)** | **Flexural Strength (MPa)** | **Unnotched Impact Strength (J/m)** |
|---|---|---|---|
| CE1 | 3060 | 110 | 227 |
| CE2 | 2800 | 100 | 158 |
| 1 | 3000 | 103 | 273 |
| 2 | 2940 | 93 | 500 |
| 3 | 2850 | 82 | 605 |
| CE3 | 2850 | 85 | 161 |
| 4 | 2870 | 104 | 516 |

## Claims

1. A composition comprising a melt processable polymer derived from a bio-based polymer and an acrylated silicone polyether wherein the bio-based polymer is selected from the group consisting of polysaccharides, peptides, aliphatic polyesters, polyamino acids, polyvinyl alcohol, polyamides, polyalkylene glycols, and copolymers thereof and wherein the melt processable polymer is produced by melt processing said bio-based polymer with the acrylated silicone polyether at temperatures that promote covalent reactions between the bio-based polymer and the acrylated silicone polyether.

2. A composition according to claim 1, wherein the acrylated silicone polyether is a compound that contains at least two ethylenically unsaturated sites.

3. A composition according to claim 1, wherein the melt processable polymer is also derived from a free radical initiator.

4. A composition according to claim 1, wherein the melt processable polymer has a ratio of flexural modulus to impact strength of less than 11:1.

5. A composition according to claim 1, wherein the melt processable polymer has a rating of HB on the UL 94 horizontal flame retardant test.

6. A composition according to claim 1, further comprising a flame retardant additive, preferably wherein the flame retardant additive composition is a phosphorous based compound, wherein in particular the flame retardant additive composition is melamine phosphate, or the melt processable polymer exhibits self extinguishing properties under UL 94 test procedures.

7. A composition according to claim 6, wherein the melt processable polymer has a rating of V2, VI or V0 on the UL 94 vertical flame retardant test.

8. A composition according to claim 1, wherein the bio-based polymer is a linear polyester.

9. A composition according to claim 8, wherein the polyester is selected from the group consisting of polycaprolactone, polyhydroxybutyric acid, polyhydroxyvaleric acid, polyethylene succinate, polybutylene succinate, polybutylene adipate, polymalic acid, polyglycolic acid, polysuccinate, polyoxalate, polybutylene diglycolate, polydioxanone, and polylactic acid.

10. A composition according to claim 1, wherein the composition has one or more of an impact strength greater than 265 joules/meter (unnotched) and flexural modulus of greater than 2500 megapascals, wherein the impact properties are obtained as specified in ASTM D256 and the flexural modulus is obtained as specified in ASTM D790.

11. A method comprising melt processing a linear bio-based polyester with an acrylated silicone polyether to at temperatures that promote free radical reactions between the linear biodegradable polyester and the acrylated silicone polyether form a melt processable polymer.

12. A method comprising forming an article by melt processing the melt processable polymer of claim 1.

13. A method according to claim 12, wherein the article includes molded architectural products, forms, automotive parts, building components, household articles, or electronic hard goods.

## Patentansprüche

1. Zusammensetzung, die ein schmelzverarbeitbares Polymer umfasst, das aus einem biobasierten Polymer und einem acrylierten Siliconpolyether abgeleitet ist, wobei das biobasierte Polymer aus der Gruppe bestehend aus Polysacchariden, Peptiden, aliphatischen Polyestern, Polyaminosäuren, Polyvinylalkohol, Polyamiden, Polyalkylenglycolen und Copolymeren davon ausgewählt ist, und wobei das schmelzverarbeitbare Polymer durch Schmelzverarbeiten des biobasierten Polymers mit dem acrylierten Siliconpolyether bei Temperaturen, die kovalente Reaktionen zwischen dem biobasierten Polymer und dem acrylierten Siliconpolyether fördern, hergestellt ist.

2. Zusammensetzung nach Anspruch 1, wobei der acrylierte Siliconpolyether eine Verbindung ist, die mindestens zwei ethylenisch ungesättigte Stellen enthält.

3. Zusammensetzung nach Anspruch 1, wobei das schmelzverarbeitbare Polymer auch aus einem freien Radikalstarter abgeleitet ist.

4. Zusammensetzung nach Anspruch 1, wobei das schmelzverarbeitbare Polymer ein Verhältnis des Biegemoduls zur Schlagzähigkeit von weniger als 11:1 aufweist.

5. Zusammensetzung nach Anspruch 1, wobei das schmelzverarbeitbare Polymer eine HB-Klassifizierung in der UL 94-horizontalen Flammschutzmittelprüfung aufweist.

6. Zusammensetzung nach Anspruch 1, die des Weiteren einen flammenhemmenden Zusatzstoff umfasst, bevorzugt wobei die flammenhemmende Zusatzstoffzusammensetzung eine phosphorbasierte Verbindung ist, wobei insbesondere die flammenhemmende Zusatzstoffzusammensetzung Melaminphosphat ist, oder das schmelzverarbeitbare Polymer selbstlöschende Eigenschaften unter UL 94-Prüfungsbedingungen zeigt.

7. Zusammensetzung nach Anspruch 6, wobei das schmelzverarbeitbare Polymer eine Klassifizierung von V2, VI oder V0 in der UL 94-vertikalen Flammschutzmittelprüfung aufweist.

8. Zusammensetzung nach Anspruch 1, wobei das biobasierte Polymer ein linearer Polyester ist.

9. Zusammensetzung nach Anspruch 8, wobei der Polyester aus der Gruppe bestehend aus Polycaprolacton, Polyhydroxybuttersäure, Polyhydroxyvaleriansäure, Polyethylensuccinat, Polybutylensuccinat, Polybutylenadipat, Polyäpfelsäure, Polyglycolsäure, Polysuccinat, Polyoxalat, Polybutylendiglycolat, Polydioxanon und Polymilchsäure ausgewählt ist.

10. Zusammensetzung nach Anspruch 1, wobei die Zusammensetzung eines oder mehrere von einer Schlagzähigkeit von größer als 265 Joule/Meter (ungekerbt) und eines Biegemoduls von größer als 2500 Megapascal aufweist, wobei die Schlagzähigkeitseigenschaften wie in ASTM D256 bestimmt erhalten sind und der Biegemodul wie in ASTM 0790 bestimmt erhalten ist.

11. Verfahren, das Schmelzverarbeiten eines linearen, biobasierten Polyesters mit einem acrylierten Siliconpolyether bei Temperaturen umfasst, die freie Radikalreaktionen zwischen dem linearen biobasierten Polyester und dem acrylierten Siliconpolyether fördern, um ein schmelzverarbeitbares Polymer zu bilden.

12. Verfahren, das Bilden eines Artikels durch Schmelzverarbeiten des schmelzverarbeitbaren Polymers gemäß Anspruch 1 umfasst.

13. Verfahren nach Anspruch 12, wobei der Artikel geformte Architekturprodukte, Formen, Autoteile, Baukomponenten, Haushaltsartikel oder Elektroartikel einschließt.

## Revendications

1. Composition comprenant un polymère pouvant être traité à l'état fondu, dérivé d'un polymère d'origine biologique et d'un polyéther de silicone acrylé, dans laquelle le polymère d'origine biologique est choisi dans le groupe constitué par les polysaccharides, les peptides, les polyesters aliphatiques, les acides polyaminés, l'alcool polyvinylique, les polyamides, les polyalkylène glycols, et leurs copolymères et dans laquelle le polymère pouvant être traité à l'état fondu est produit par traitement à l'état fondu dudit polymère d'origine biologique avec le polyéther de silicone acrylé à des températures qui favorisent les réactions covalentes entre le polymère d'origine biologique et le polyéther de silicone acrylé.

2. Composition selon la revendication 1, dans laquelle le polyéther de silicone acrylé est un composé qui contient au moins deux sites à insaturation éthylénique.

3. Composition selon la revendication 1, dans laquelle le polymère pouvant être traité à l'état fondu est également dérivé d'un initiateur de radicaux libres.

4. Composition selon la revendication 1, dans laquelle le polymère pouvant être traité à l'état fondu a un rapport du module de flexion à la résistance au choc inférieur à 11:1.

5. Composition selon la revendication 1, dans laquelle le polymère pouvant être traité à l'état fondu a une note de HB selon le test d'inflammabilité UL 94 à l'horizontale.

6. Composition selon la revendication 1, comprenant en outre un additif ignifugeant, de préférence dans laquelle la composition d'additif ignifugeant est un composé à base de phosphore, dans laquelle en particulier la composition d'additif ignifugeant est du phosphate de mélamine, ou le polymère pouvant être traité à l'état fondu présente des propriétés d'auto-extinction selon les procédures de test UL 94.

7. Composition selon la revendication 6, dans laquelle le polymère pouvant être traité à l'état fondu a une note de V2, V1 ou V0 selon le test d'inflammabilité UL 94 à la verticale.

8. Composition selon la revendication 1, dans laquelle le polymère d'origine biologique est un polyester linéaire.

9. Composition selon la revendication 8, dans laquelle le polyester est choisi dans le groupe constitué par la polycaprolactone, l'acide polyhydroxybutyrique, l'acide polyhydroxyvalérique, le poly(succinate d'éthylène), le poly(succinate de butylène), le poly(adipate de butylène), l'acide polymalique, l'acide polyglycolique, le polysuccinate, le polyoxalate, le poly(diglycolate de butylène), la polydioxanone, et l'acide polylactique.

10. Composition selon la revendication 1, dans laquelle la composition présente un ou plusieurs éléments parmi une résistance au choc supérieure à 265 joules/mètre (sans entaille) et un module de flexion supérieur à 2 500 mégapascals, dans laquelle les propriétés de résistance au choc sont obtenues comme spécifié dans la norme ASTM D256 et le module de flexion est obtenu comme spécifié dans la norme ASTM D790.

11. Procédé comprenant le traitement à l'état fondu d'un polyester linéaire d'origine biologique avec un polyéther de silicone acrylé à des températures qui favorisent les réactions radicalaires entre le polyester linéaire biodégradable et le polyéther de silicone acrylé forme un polymère pouvant être traité à l'état fondu.

12. Procédé comprenant la formation d'un article par traitement à l'état fondu du polymère pouvant être traité à l'état fondu selon la revendication 1.

13. Procédé selon la revendication 12, dans lequel l'article comprend des produits architecturaux moulés, des formes, des pièces automobiles, des composants de construction, des articles ménagers ou des biens durables électroniques.
